# EUROPEAN PATENT APPLICATION

(11) **EP 3 182 746 A1**
(43) Date of publication of application: **21.06.2017**
(21) Application number: 16204430.9
(22) Date of filing: 15.12.2016
(51) Int. Cl.: H04W 12/00, H04W 12/04, H04W 12/08, H04W 48/00, H04W 48/10, H04W 48/16

(54) **METHOD AND APPARATUS FOR TRANSMITTING ROUTING INFORMATION**

(30) Priority: 15.12.2015 CN 201510937775
(71) Applicant: Xiaomi Inc., Beijing 100085 (CN)
(72) Inventor: MENG, Deguo, Haidian District, Beijing 100085 (CN); DING, Yi, Haidian District, Beijing 100085 (CN); HOU, Enxing, Haidian District, Beijing 100085 (CN)
(74) Representative: Robson, Aidan John

(57) **Abstract**

The present disclosure provides a method and apparatus for transmitting routing information. The method includes: enabling (S11, S21) a wireless connection function in an access point mode after being started up; establishing (S12, S23) a wireless connection with other device as an access point; receiving (S13) routing information sent by other device via the wireless connection; switching (S14, S26) the wireless connection function from the access point mode to a terminal mode; and sending (S15) the routing information to a router as a terminal, so as to establish a connection with the router.

## Description

### TECHNICAL FIELD

The present disclosure generally relates to field of computer processing, and more particularly, to a method and apparatus for transmitting routing information.

### BACKGROUND

With development of electronic technology, various electronic devices, such as TVs, computers, and air conditioners, are emerging in an endless stream. Moreover, after appearance of Internet, various electric appliances are more and more smart. Such electric appliances may be called as smart devices. The smart devices usually need to connect to a router, so as to access Internet via the router.

### SUMMARY

In order to solve the problems in the related art, the present disclosure provides a method and apparatus for transmitting routing information.

According to a first aspect of embodiments of the present disclosure, there is provided a method for transmitting routing information, including:
enabling a wireless connection function in an access point mode after being started up;
establishing a wireless connection with other device as an access point;
receiving routing information sent by said other device via the wireless connection;
switching the wireless connection function from the access point mode to a terminal mode; and
sending the routing information to a router as a terminal, so as to establish a connection with the router.

The technical solutions provided by the embodiments of the present disclosure may have the following beneficial effects: by establishing a wireless connection with other device in an access point mode, then acquiring routing information via other device, and then connecting to a router according to the routing information, when establishing a wireless connection between a smart device and a router, it is unnecessary for a user to manually input the routing information into the smart device via other device, which reduces the number of the user operations when establishing the wireless connection between the smart device and the router.

The routing information is routing information having been encrypted.

The method further includes:
decrypting the received routing information according to a preconfigured secret key so as to obtain the decrypted routing information.

The sending the routing information to the router as the terminal includes:
sending the decrypted routing information to the router as the terminal.

The technical solutions provided by the embodiments of the present disclosure may have the following beneficial effects: the routing information is encrypted, and when the smart device is connected to a router, the smart device decrypts the encrypted routing information according to a preconfigured secret key, and then the smart device is connected to the router via the decrypted routing information; in this way, only permissible smart devices can be connected to the router, which improves a security of the routing information of the router.

The method further includes:
before establishing the wireless connection with other device as the access point, broadcasting a device identification of itself.

The technical solutions provided by the embodiments of the present disclosure may have the following beneficial effects: the smart device broadcasts a device identification of itself, such that other device can find the smart device, and then a wireless connection may be established between the smart device and other device; in this way, it is unnecessary for the user to manually operate other device to find the smart device when connecting the smart device to other device, which further reduces the number of the user operations when establishing the wireless connection between the smart device and the router.

The routing information includes a service set identifier and a password.

The technical solutions provided by the embodiments of the present disclosure may have the following beneficial effects: the routing information includes a service set identifier and a password, in this way, when acquiring the routing information, the smart device can connect to the router according to the routing information, which achieves a purpose of automatically connecting to the router by the smart device, and reducing the number of the user operations when establishing the wireless connection between the smart device and the router.

According to a second aspect of embodiments of the present disclosure, there is provided a method for transmitting routing information, including:
establishing a wireless connection with a smart device in an access point mode; and
sending routing information to the smart device such that the smart device establishes a connection with a router according to the routing information.

The technical solutions provided by the embodiments of the present disclosure may have the following beneficial effects: by establishing a wireless connection with a smart device in an access point mode, and sending routing information to the smart device, it is convenient for the smart device to establish a wireless connection with the router according to the routing information, and when establishing a wireless connection between a smart device and a router, it is unnecessary for a user to manually input routing information into the smart device via other device, which reduces the number of the user operations when establishing the wireless connection between the smart device and the router.

The method further includes:
before establishing the wireless connection with the smart device in the access point mode, receiving a device identification broadcasted by the smart device;
sending the device identification to a server;
receiving a secret key corresponding to the device identification sent by the server; and
encrypting the routing information according to the received secret key so as to obtain the encrypted routing information; and
the sending routing information to the smart device includes:
sending the encrypted routing information to the smart device.

The technical solutions provided by the embodiments of the present disclosure may have the following beneficial effects: by acquiring a secret key corresponding to the smart device via a device identification broadcasted by the smart device, and encrypting the routing information according to the secret key before sending the routing information to the smart device, the routing information acquired by the smart device can be only decrypted by the smart device itself, thereby ensuring the security of the routing information, and improving the security of the smart device when being wirelessly connected to the router.

The routing information includes a service set identifier and a password.

The technical solutions provided by the embodiments of the present disclosure may have the following beneficial effects: the routing information includes a service set identifier and a password, in this way, after sending the routing information to the smart device, the smart device can connect to the router according to the routing information, which achieves a purpose of automatically connecting to the router by the smart device, and reducing the number of the user operations when establishing the wireless connection between the smart device and the router.

According to a third aspect of embodiments of the present disclosure, there is provided an apparatus for transmitting routing information, including:
an enabling module configured to enable a wireless connection function in an access point mode after being started up;
an establishing module configured to establish a wireless connection with other device as an access point;
a receiving module configured to receive routing information sent by said other device via the wireless connection;
a switching module configured to switch the wireless connection function from the access point mode to a terminal mode; and
a sending module configured to send the routing information to a router as a terminal, so as to establish a connection with the router.

The routing information is routing information having been encrypted, and
the apparatus further includes:
a decrypting module configured to decrypt the received routing information according to a preconfigured secret key so as to obtain the decrypted routing information; and
the sending module includes:
a sending submodule configured to send the decrypted routing information to the router as the terminal.

The apparatus further includes:
a broadcasting module configured to, before establishing the wireless connection with other device as the access point, broadcast a device identification of itself.

According to a fourth aspect of embodiments of the present disclosure, there is provided an apparatus for transmitting routing information, including:
an establishing module configured to establish a wireless connection with a smart device in an access point mode; and
a first sending module configured to send routing information to the smart device such that the smart device establishes a connection with a router according to the routing information.

The apparatus further includes:
a first receiving module configured to, before establishing the wireless connection with the smart device in the access point mode, receive a device identification broadcasted by the smart device;
a second sending module configured to send the device identification to a server;
a second receiving module configured to receive a secret key corresponding to the device identification sent by the server; and
an encrypting module configured to encrypt the routing information according to the received secret key so as to obtain the encrypted routing information; and
the first sending module includes:
a sending submodule configured to send the encrypted routing information to the smart device.

According to a fifth aspect of embodiments of the present disclosure, there is provided an apparatus for transmitting routing information, including:
a processor; and
a memory for storing instructions executable by the processor;
wherein the processor is configured to:
enable a wireless connection function in an access point mode after being started up;
establish a wireless connection with other device as an access point;
receive routing information sent by said other device via the wireless connection;
switch the wireless connection function from the access point mode to a terminal mode; and
send the routing information to a router as a terminal, so as to establish a connection with the router.

According to a sixth aspect of embodiments of the present disclosure, there is provided an apparatus for transmitting routing information, including:
a processor; and
a memory for storing instructions executable by the processor;
wherein the processor is configured to:
establish a wireless connection with a smart device in an access point mode; and
send routing information to the smart device such that the smart device establishes a connection with a router according to the routing information.

The present invention also provides a computer program, which when executing on a processor of a smart device, performs the above method.

The present invention also provides a computer program, which when executing on a processor of a device, performs the above method.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for transmitting routing information, according to an exemplary embodiment.
Fig. 2 is a detailed flow chart illustrating a method for transmitting routing information, according to an exemplary embodiment.
Fig. 3 is a flow chart illustrating a method for transmitting routing information, according to an exemplary embodiment.
Fig. 4 is a detailed flow chart illustrating a method for transmitting routing information, according to an exemplary embodiment.
Fig. 5 is a detailed flow chart illustrating a method for transmitting routing information, according to an exemplary embodiment.
Fig. 6 is a block diagram illustrating an apparatus for transmitting routing information, according to an exemplary embodiment.
Fig. 7 is a block diagram illustrating an apparatus for transmitting routing information, according to an exemplary embodiment.
Fig. 8 is a block diagram illustrating an apparatus for transmitting routing information, according to an exemplary embodiment.
Fig. 9 is a block diagram illustrating an apparatus for transmitting routing information, according to an exemplary embodiment.
Fig. 10 is a block diagram illustrating an apparatus for transmitting routing information, according to an exemplary embodiment.
Fig. 11 is a block diagram illustrating an apparatus for transmitting routing information, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The embodiments of the present disclosure provide a method for transmitting routing information. In the embodiments of the present disclosure, a smart device and other device are included. The smart device may be a device into which the user cannot directly input the routing information and a wireless connection with the router according to the routing information cannot be established, such as a smart air conditioner, a smart air purifier, or a smart lamp; and other device may be a device into which the user can directly input the routing information and a wireless connection with the router according to the routing information can be established, such as a mobile phone, and a tablet computer, or may be a smart device which has established a connection with the router. Through the method for transmitting routing information provided by the embodiments of the present disclosure, the smart device can automatically establish a wireless connection with the router, and it is unnecessary for the user to utilize an application program in a device, such as a mobile phone and a tablet computer, to control the smart device to establish the wireless connection with the router.

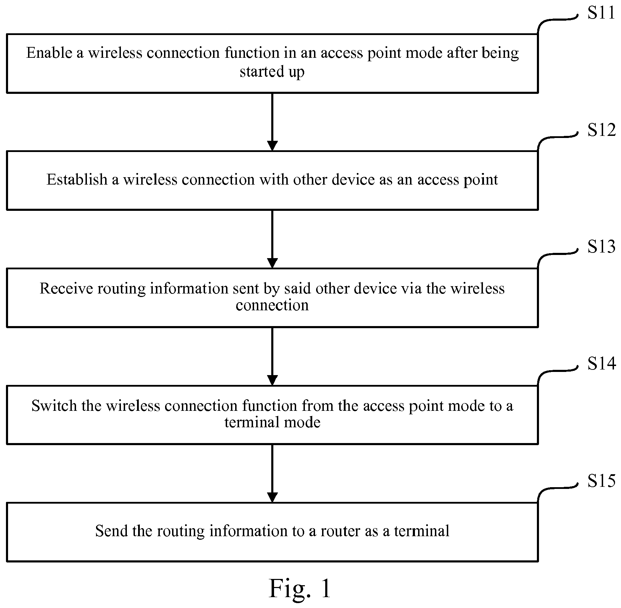

Fig. 1 is a flow chart illustrating a method for transmitting routing information, according to an exemplary embodiment. As shown in Fig. 1, the method may be implemented by a smart device, and includes the following steps.

In step S11, after being started up, a wireless connection function is enabled in an access point mode.

In step S12, as an access point, a wireless connection is established with other device.

In step S13, routing information sent by other device is received via the wireless connection.

In step S14, the wireless connection function is switched from the access point mode to a terminal mode.

In step S15, as a terminal, the routing information is sent to a router, so as to establish a connection with the router.

In the method for transmitting routing information provided by the embodiments of the present disclosure, by establishing a wireless connection with other device in an access point mode, then acquiring routing information via other device, and then connecting to a router according to the routing information, when establishing a wireless connection between a smart device and a router, it is unnecessary for a user to manually input the routing information into the smart device via other device, which reduces the number of the user operations when establishing the wireless connection between the smart device and the router.

In an embodiment, the routing information is routing information having been encrypted.

The method may also be implemented as step A1.

In the step A1, the received routing information is decrypted according to a preconfigured secret key so as to obtain the decrypted routing information.

The step S 15 may also be implemented as step A2.

In step A2, as the terminal, the decrypted routing information is sent to the router.

By adopting the above method, the routing information is encrypted, and when the smart device is connected to a router, the smart device decrypts the encrypted routing information according to a preconfigured secret key, and then the smart device is connected to the router via the decrypted routing information; in this way, only permissible smart devices can be connected to the router, which improves a security of the routing information of the router.

In an embodiment, the method may also be implemented as step B1.

In the step B1, before establishing the wireless connection with other device as the access point, a device identification of itself is broadcasted.

By adopting the above method, the smart device broadcasts a device identification of itself, such that other device can find the smart device, and then a wireless connection may be established between the smart device and other device; in this way, it is unnecessary for the user to manually operate other device to find the smart device when connecting the smart device to other device, which further reduces the number of the user operations when establishing the wireless connection between the smart device and the router.

In an embodiment, the routing information includes a service set identifier and a password.

By adopting the above method, the routing information includes a service set identifier and a password, in this way, when acquiring the routing information, the smart device can connect to the router according to the routing information, which achieves a purpose of automatically connecting to the router by the smart device, and reducing the number of the user operations when establishing the wireless connection between the smart device and the router.

The method for transmitting routing information provided by the embodiments of the present disclosure is briefly introduced in the embodiment shown in Fig. 1. Hereinafter, how to achieve the method for transmitting routing information by the embodiments of the present disclosure will be explained in detail by using other embodiments.

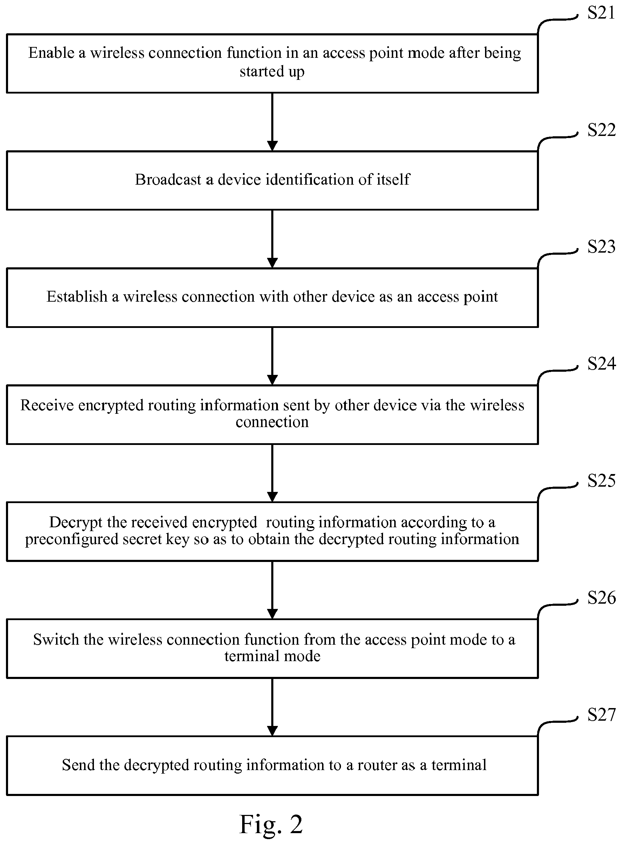

As shown in Fig. 2, the embodiments of the present disclosure provide a method for transmitting routing information, which is applied in a smart device side. The smart device is a smart camera, and other device is a mobile phone. The detailed implementing steps are as follows.

In step S21, after being started up, a wireless connection function is enabled in an access point mode.

For example, after being started up, the smart camera enables the wireless connection function in the access point mode, i.e., the smart camera per se is used as a router, and other device may find the smart camera and establish a wireless connection to the smart camera.

In step S22, a device identification of itself is broadcasted.

For example, the smart camera broadcasts the device identification X1 of itself.

In step S23, as an access point, a wireless connection is established with other device.

For example, a mobile phone establishes a wireless connection with the smart camera via the device identification X1 broadcasted by the smart camera.

In step S24, encrypted routing information sent by other device is received via the wireless connection. The routing information includes a service set identifier and a password.

For example, after establishing a wireless connection with the mobile phone, the smart camera receives an encrypted service set identifier and password of a router sent by the mobile phone, i.e., receives an encrypted user name and password of a user.

In step S25, the received encrypted routing information is decrypted according to a preconfigured secret key so as to obtain the decrypted routing information.

For example, the smart camera decrypts the received encrypted user name and password of the router according to a secret key preset in the smart camera before leaving the factory, so as to acquire the decrypted user name and password of the router.

In step S26, the wireless connection function is switched from the access point mode to a terminal mode.

For example, after acquiring the decrypted user name and password of the router, the smart camera switches the current operation mode from the access point mode to the terminal mode. In the terminal mode, the smart camera may function as a terminal device and establish a wireless connection with the router.

In step S27, as a terminal, the decrypted routing information is sent to a router, so as to establish a connection with the router.

For example, the smart camera functions as the terminal device and sends the decrypted user name and password of the router to the router, then the router determines whether to establish a wireless connection request via the smart camera according to the decrypted user name and password of the router sent by the smart camera. If the decrypted user name and password of the router sent by the smart camera are correct, the router establishes a wireless connection with the smart camera.

The embodiments of the present disclosure provide a method for transmitting routing information. By establishing a wireless connection with other device in an access point mode, acquiring the encrypted routing information via other device, then decrypting the encrypted routing information via the preconfigured secret key, and then connecting to a router according to the routing information, when establishing a wireless connection between a smart device and a router, it is unnecessary for a user to manually input the routing information into the smart device via other device, which reduces the number of the user operations when establishing the wireless connection between the smart device and the router; and due to the encryption and decryption process of information on the user, the wireless connection network provided by the router is more safe.

The above embodiments introduce the procedure of the method for transmitting routing information provided by the embodiments of the present disclosure implemented at the smart device side, and the procedure of the method for transmitting routing information provided by the embodiments of the present disclosure implemented at other device side will be further explained by using the following embodiments.

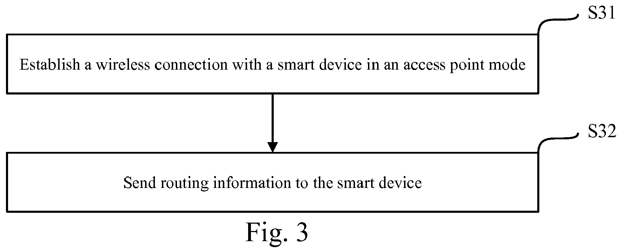

Fig. 3 is a flow chart illustrating a method for transmitting routing information, according to an exemplary embodiment. As shown in Fig. 3, the method may be implemented by other device, and includes the following steps.

In step S31, a wireless connection is established with a smart device in an access point mode.

In step S32, routing information is sent to the smart device such that the smart device establishes a connection with a router according to the routing information.

The embodiments of the present disclosure provide a method for transmitting routing information. By establishing a wireless connection with a smart device in an access point mode, and sending routing information to the smart device, it is convenient for the smart device to establish a wireless connection with the router according to the routing information, and when establishing a wireless connection between a smart device and a router, it is unnecessary for a user to manually input routing information into the smart device via other device, which reduces the number of the user operations when establishing the wireless connection between the smart device and the router.

In an embodiment, the method may also be implemented as step C1-step C4.

In the step C1, before establishing the wireless connection with the smart device in the access point mode, a device identification broadcasted by the smart device is received.

In the step C2, the device identification is sent to a server.

In the step C3, a secret key corresponding to the device identification sent by the server is received.

In the step C4, the routing information is encrypted according to the received secret key so as to obtain the encrypted routing information.

The step S32 may also be implemented as the step C5.

In the step C5, the encrypted routing information is sent to the smart device.

By adopting the above method, a secret key corresponding to the smart device is acquired via a device identification broadcasted by the smart device, and the routing information is encrypted according to the secret key before sending the routing information to the smart device, in this way, the routing information acquired by the smart device can be only decrypted by the smart device itself, thereby ensuring the security of the routing information, and improving the security of the smart device when being wirelessly connected to the router.

In an embodiment, the routing information includes a service set identifier and a password.

By adopting the above method, the routing information includes a service set identifier and a password, in this way, after sending the routing information to the smart device, the smart device can connect to the router according to the routing information, which achieves a purpose of automatically connecting to the router by the smart device, and reducing the number of the user operations when establishing the wireless connection between the smart device and the router.

The method for transmitting routing information provided by the embodiments of the present disclosure is briefly introduced in the embodiment shown in Fig. 3. Hereinafter, how to implement the method for transmitting routing information by the embodiments of the present disclosure will be explained in detail by using other embodiments.

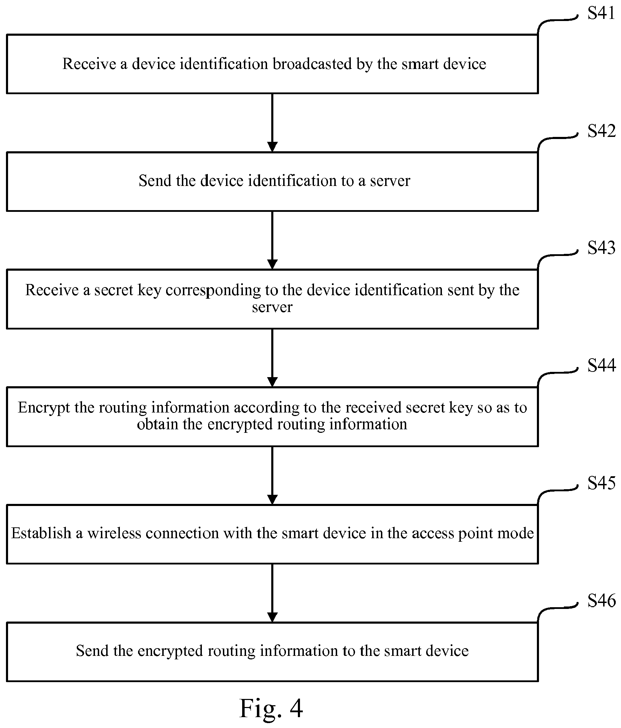

As shown in Fig. 4, the embodiments of the present disclosure provide a method for transmitting routing information, which is applied in other device side. The smart device is a smart camera, and other device is a mobile phone. The detailed implementing steps are as follows.

In step S41, a device identification broadcasted by the smart device is received.

For example, the mobile phone receives a device identification X1 broadcasted by the smart camera.

In step S42, the device identification is sent to a server.

For example, the mobile phone sends the received device identification X1 of the smart camera to the server.

In step S43, a secret key corresponding to the device identification sent by the server is received.

For example, a secret key corresponding to the device identification X1 of the smart camera found by the server according to the device identification X1 of the smart camera is received.

In step S44, the routing information is encrypted according to the received secret key so as to obtain the encrypted routing information, and the routing information includes a service set identifier and a password.

For example, the mobile phone encrypts the service set identifier and the password of the router according to the received secret key corresponding to the device identification X1 of the smart camera, to obtain the encrypted service set identifier and the password, i.e., encrypts user names and passwords of all the routers saved in the mobile phone according to the secret key.

In step S45, a wireless connection is established with the smart device in the access point mode.

For example, the mobile phone establishes a wireless connection with the smart camera operating in an access point mode.

In step S46, the encrypted routing information is sent to the smart device such that the smart device establishes a connection with a router according to the routing information.

For example, the mobile phone sends the encrypted user name and password of the router to the smart camera, the smart camera may function as a terminal device and send the decrypted user name and password of the router to the router, then the router may determine whether to establish a wireless connection request via the smart camera according to the user name and password of the router sent by the smart camera, and if the user name and password of the router sent by the smart camera are correct, the router establishes the wireless connection with the smart camera.

The embodiments of the present disclosure provide a method for transmitting routing information. By acquiring a secret key corresponding to the smart device via a device identification broadcasted by the smart device, encrypting the routing information according to the secret key before sending the routing information to the smart device, establishing a wireless connection with the smart device in the access point mode, and sending the routing information to the smart device, it is convenient for the smart device to establish a wireless connection with the router according to the routing information, and when establishing a wireless connection between a smart device and a router, it is unnecessary for a user to manually input routing information into the smart device via other device, which reduces the number of the user operations when establishing the wireless connection between the smart device and the router. And the routing information acquired by the smart device can be only decrypted by the smart device itself, thereby ensuring the security of the routing information, and improving the security of the smart device when being wirelessly connected to the router.

The above embodiments respectively explain the smart device side and the other device side in detail. Hereinafter, the explanations of the method for transmitting routing information provided by the embodiments of the present disclosure implemented at both the smart device side and the other device side will be given by using the following embodiments.

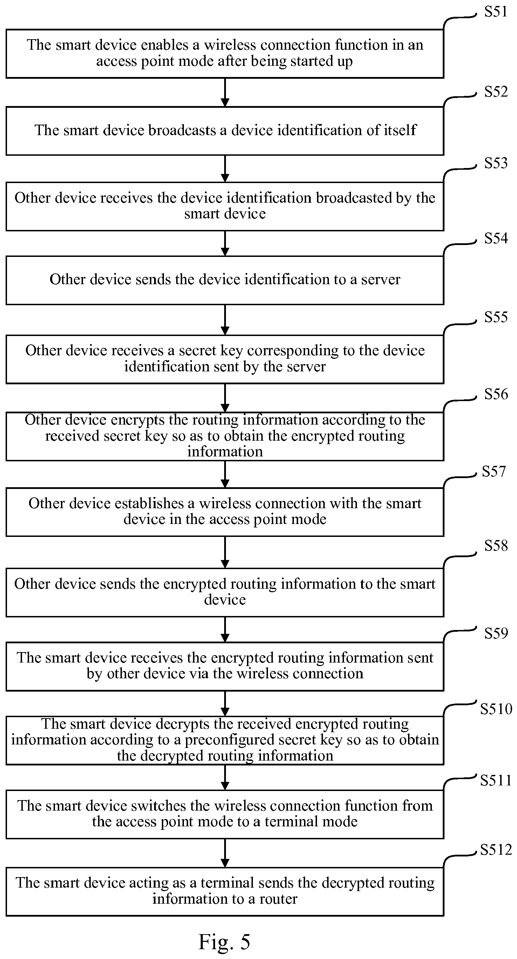

As shown in Fig. 5, the embodiments of the present disclosure provide a method for transmitting routing information, which is applied in smart device side and other device side. The smart device is a smart camera, and other device is a mobile phone. The detailed implementing steps are as follows.

In step S51, the smart device enables a wireless connection function in an access point mode after being started up.

For example, a smart camera, after being started up, enables a wireless connection function in an access point mode, i.e., the smart camera per se functions as a router, and other device may find the smart camera and establish a wireless connection with the smart camera.

In step S52, the smart device broadcasts a device identification of itself.

For example, the smart camera broadcasts a device identification X1 of itself.

In step S53, other device receives the device identification broadcasted by the smart device.

For example, the mobile phone receives the device identification X1 broadcasted by the smart camera.

In step S54, other device sends the device identification to a server.

For example, the mobile phone sends the received device identification X1 of the smart camera to the server.

In step S55, other device receives a secret key corresponding to the device identification sent by the server.

For example, a secret key corresponding to the device identification X1 of the smart camera found by the server according to the device identification X1 of the smart camera is received.

In step S56, other device encrypts the routing information according to the received secret key so as to obtain the encrypted routing information, and the routing information includes a service set identifier and a password.

For example, the mobile phone encrypts the service set identifier and the password of the router according to the received secret key corresponding to the device identification X1 of the smart camera, to obtain the encrypted service set identifier and password, i.e., encrypts user names and passwords of all the routers saved in the mobile phone according to the secret key.

In step S57, other device establishes a wireless connection with the smart device in the access point mode.

For example, the mobile phone establishes a wireless connection with the smart camera operating in an access point mode.

In step S58, other device sends the encrypted routing information to the smart device such that the smart device establishes a connection with a router according to the routing information.

For example, the mobile phone sends the encrypted user name and password of the router to the smart camera.

In step S59, the smart device receives the encrypted routing information sent by other device via the wireless connection. The routing information includes a service set identifier and a password.

For example, after establishing a wireless connection with the mobile phone, the smart camera receives an encrypted service set identifier and password of a router sent by the mobile phone, i.e., receives an encrypted user name and password of a user.

In step S510, the smart device decrypts the received encrypted routing information according to a preconfigured secret key so as to obtain the decrypted routing information.

For example, the smart camera decrypts the received encrypted user name and password of the router according to a secret key preset in the smart camera before leaving the factory, so as to acquire the decrypted user name and password of the router.

In step S511, the smart device switches the wireless connection function from the access point mode to a terminal mode.

For example, after acquiring the decrypted user name and password of the router, the smart camera switches the current operation mode from the access point mode to the terminal mode. In the terminal mode, the smart camera may function as a terminal device and establish a wireless connection with the router.

In step S512, the smart device acting as a terminal sends the decrypted routing information to a router, so as to establish a connection with the router.

For example, the smart camera functions as the terminal device and sends the decrypted user name and password of the router to the router, then the router determines whether to establish a wireless connection request via the smart camera according to the decrypted user name and password of the router sent by the smart camera. If the decrypted user name and password of the router sent by the smart camera are correct, the router establishes a wireless connection with the smart camera.

The implementing procedure of transmitting a screen shot is understood through the above described introduction. The procedure is implemented via a mobile terminal and a computer. Hereinafter, introduction to inner structures and functions of two devices are given respectively.

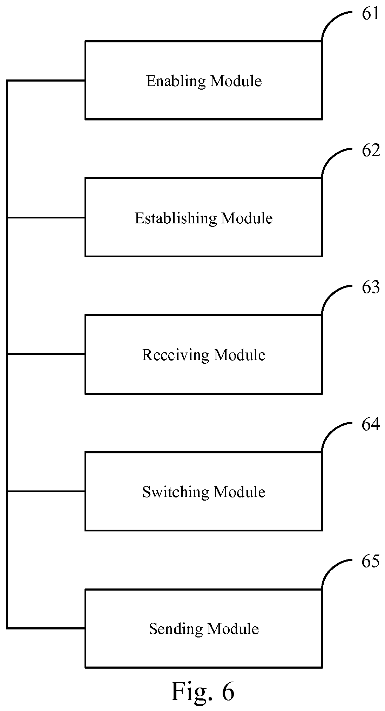

Fig. 6 is a block diagram illustrating an apparatus for transmitting routing information, according to an exemplary embodiment. As shown in Fig. 6, the apparatus includes: an enabling module 61, an establishing module 62, a receiving module 63, a switching module 64, and a sending module 65.

The enabling module 61 is configured to enable a wireless connection function in an access point mode after being started up.

The establishing module 62 is configured to establish a wireless connection with other device as an access point.

The receiving module 63 is configured to receive routing information sent by said other device via the wireless connection.

The switching module 64 is configured to switch the wireless connection function from the access point mode to a terminal mode.

The sending module 65 is configured to send the routing information to a router as a terminal, so as to establish a connection with the router.

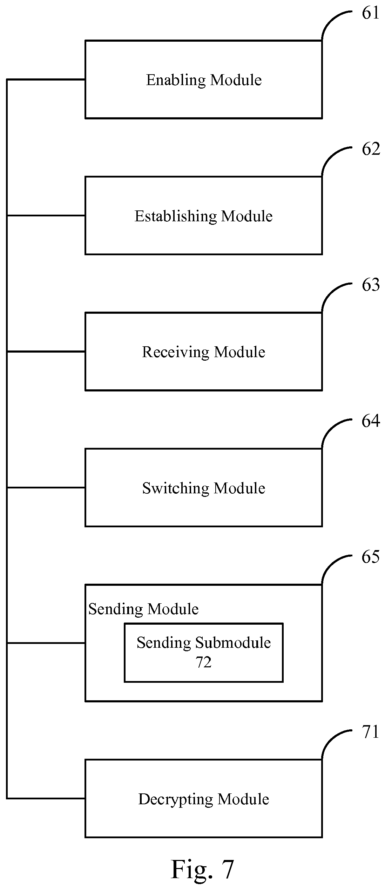

As shown in Fig. 7, the routing information is routing information having been encrypted, and the apparatus further includes: a decrypting module 71.

The decrypting module 71 is configured to decrypt the received routing information according to a preconfigured secret key so as to obtain the decrypted routing information.

The sending module 65 includes: a sending submodule 72.

The sending submodule 72 is configured to send the decrypted routing information to the router as the terminal.

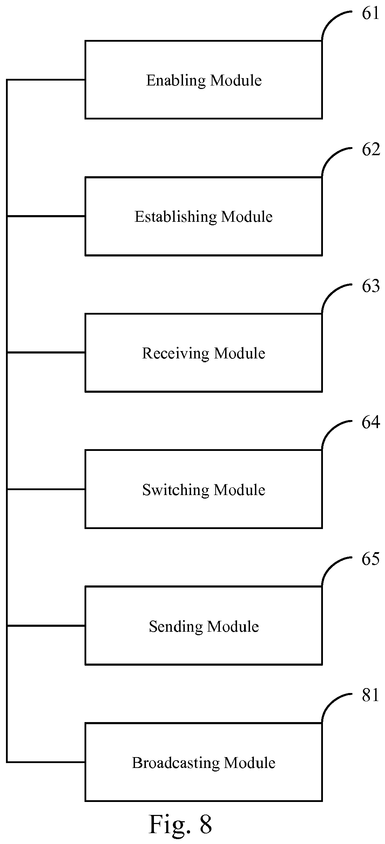

As shown in Fig. 8, the apparatus further includes: a broadcasting module 81.

The broadcasting module 81 is configured to, before establishing the wireless connection with other device as the access point, broadcast a device identification of itself.

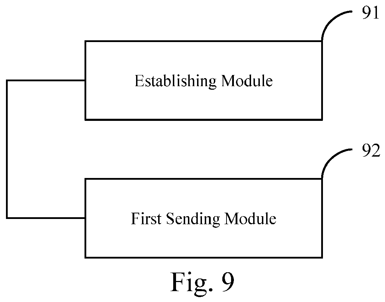

Fig. 9 is a block diagram illustrating an apparatus for transmitting routing information, according to an exemplary embodiment. As shown in Fig. 9, the apparatus includes: an establishing module 91, and a first sending module 92.

The establishing module 91 is configured to establish a wireless connection with a smart device in an access point mode.

The first sending module 92 is configured to send routing information to the smart device such that the smart device establishes a connection with a router according to the routing information.

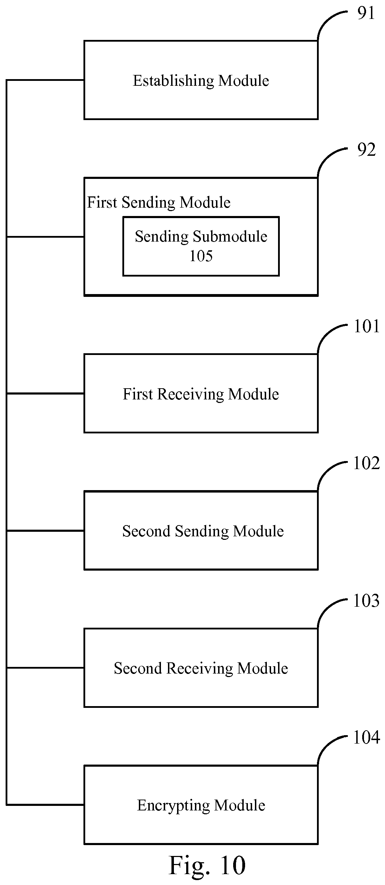

As shown in Fig. 10, the apparatus further includes: a first receiving module 101, a second sending module 102, a second receiving module 103, and an encrypting module 104.

The first receiving module 101 is configured to, before establishing the wireless connection with the smart device in the access point mode, receive a device identification broadcasted by the smart device.

The second sending module 102 is configured to send the device identification to a server.

The second receiving module 103 is configured to receive a secret key corresponding to the device identification sent by the server.

The encrypting module 104 is configured to encrypt the routing information according to the received secret key so as to obtain the encrypted routing information.

The first sending module 92 includes: a sending submodule 105.

The sending submodule 105 is configured to send the encrypted routing information to the smart device.

With respect to the device in the above embodiments, the specific manners for performing operations for individual modules therein have been described in detail in the embodiments regarding the methods, which will not be elaborated herein.

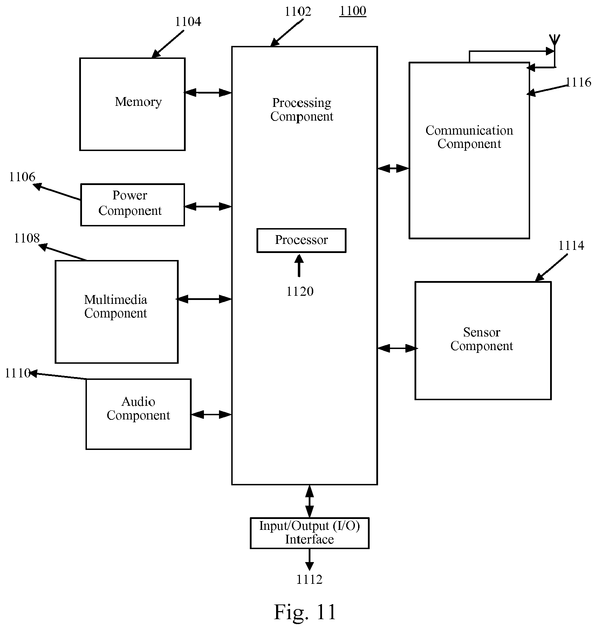

Fig. 11 is a block diagram illustrating an apparatus 1100 for transmitting routing information, according to an exemplary embodiment. For example, the apparatus 1100 may be a mobile phone, a computer, a digital broadcast terminal, a messaging device, a gaming console, a tablet, a medical device, exercise equipment, a personal digital assistant, and the like.

Referring to Fig. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 may include a power management system, one or more power sources, and any other components associated with the generation, management, and distribution of power in the apparatus 1100.

The multimedia component 1108 includes a screen providing an output interface between the apparatus 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 may further include a loudspeaker for outputting the audio signal.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may detect an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the apparatus 1100 and other devices. The apparatus 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the apparatus 1100, for performing the above-described methods. For example, the non-transitory computer-readable storage medium may be a ROM, a RAM, a CD-ROM, a magnetic tape, a floppy disc, an optical data storage device, and the like.

An apparatus for transmitting routing information includes:
a processor; and
a memory for storing instructions executable by the processor;
wherein the processor is configured to:
enable a wireless connection function in an access point mode after being started up;
establish a wireless connection with other device as an access point;
receive routing information sent by said other device via the wireless connection;
switch the wireless connection function from the access point mode to a terminal mode; and
send the routing information to a router as a terminal, so as to establish a connection with the router.

The processor may be further configured to:
the routing information is routing information having been encrypted, and
the method further includes:
decrypting the received routing information according to a preconfigured secret key so as to obtain the decrypted routing information; and
the sending the routing information to the router as the terminal includes:
sending the decrypted routing information to the router as the terminal.

The processor may be further configured to:
the method further includes:
before establishing the wireless connection with other device as the access point, broadcasting a device identification of itself.

The processor may be further configured to:
the routing information includes a service set identifier and a password.

An apparatus for transmitting routing information includes:
a processor; and
a memory for storing instructions executable by the processor;
wherein the processor is configured to:
establish a wireless connection with a smart device in an access point mode; and
send routing information to the smart device such that the smart device establishes a connection with a router according to the routing information.

The processor may be further configured to:
the method further includes:
before establishing the wireless connection with the smart device in the access point mode, receiving a device identification broadcasted by the smart device;
sending the device identification to a server;
receiving a secret key corresponding to the device identification sent by the server; and
encrypting the routing information according to the received secret key so as to obtain the encrypted routing information; and
the sending routing information to the smart device includes:
sending the encrypted routing information to the smart device.

The processor may be further configured to:
the routing information includes a service set identifier and a password.

A non-transitory computer readable storage medium, when instructions in the storage medium is executed by the processor of the mobile terminal, enables the mobile terminal to perform the method for transmitting routing information, including:
enabling a wireless connection function in an access point mode after being started up;
establishing a wireless connection with other device as an access point;
receiving routing information sent by said other device via the wireless connection;
switching the wireless connection function from the access point mode to a terminal mode; and
sending the routing information to a router as a terminal, so as to establish a connection with the router.

The instructions in the storage medium may further include:
the routing information is routing information having been encrypted, and
the method further includes:
decrypting the received routing information according to a preconfigured secret key so as to obtain the decrypted routing information; and
the sending the routing information to the router as the terminal includes:
sending the decrypted routing information to the router as the terminal.

The instructions in the storage medium may further include:
the method further includes:
before establishing the wireless connection with other device as the access point, broadcasting a device identification of itself.

The instructions in the storage medium may further include:
the routing information includes a service set identifier and a password.

A non-transitory computer readable storage medium, when instructions in the storage medium is executed by the processor of the mobile terminal, enables the mobile terminal to perform the method for transmitting routing information, including:
establishing a wireless connection with a smart device in an access point mode; and
sending routing information to the smart device such that the smart device establishes a connection with a router according to the routing information.

The instructions in the storage medium may further include:
the method further includes:
before establishing the wireless connection with the smart device in the access point mode, receiving a device identification broadcasted by the smart device;
sending the device identification to a server;
receiving a secret key corresponding to the device identification sent by the server; and
encrypting the routing information according to the received secret key so as to obtain the encrypted routing information; and
the sending routing information to the smart device includes:
sending the encrypted routing information to the smart device.

The instructions in the storage medium may further include:
the routing information includes a service set identifier and a password.

## Claims

1. A method for transmitting routing information, comprising:
enabling (S11, S21) a wireless connection function in an access point mode after being started up;
establishing (S12, S23) a wireless connection with other device as an access point;
receiving (S13) routing information sent by said other device via the wireless connection;
switching (S14, S26) the wireless connection function from the access point mode to a terminal mode; and
sending (S15) the routing information to a router as a terminal, so as to establish a connection with the router.

2. The method of claim 1, wherein the routing information is routing information having been encrypted, and
the method further comprises:
decrypting (S25) the received routing information according to a preconfigured secret key so as to obtain the decrypted routing information; and
the sending (S15) the routing information to the router as the terminal comprises:
sending (S27) the decrypted routing information to the router as the terminal.

3. The method of claim 1, further comprising:
before establishing the wireless connection with other device as the access point, broadcasting (S22) a device identification of itself.

4. The method of claim 1, wherein the routing information comprises a service set identifier and a password.

5. A method for transmitting routing information, comprising:
establishing (S31) a wireless connection with a smart device in an access point mode; and
sending (S32) routing information to the smart device such that the smart device establishes a connection with a router according to the routing information.

6. The method of claim 5, further comprising:
before establishing the wireless connection with the smart device in the access point mode, receiving (S41) a device identification broadcasted by the smart device;
sending (S42) the device identification to a server;
receiving (S43) a secret key corresponding to the device identification sent by the server; and
encrypting (S44) the routing information according to the received secret key so as to obtain the encrypted routing information; and
the sending (S32) routing information to the smart device comprises:
sending (S46) the encrypted routing information to the smart device.

7. The method of claim 5, wherein the routing information comprises a service set identifier and a password.

8. An apparatus for transmitting routing information, comprising:
an enabling module (61) configured to enable a wireless connection function in an access point mode after being started up;
an establishing module (62) configured to establish a wireless connection with other device as an access point;
a receiving module (63) configured to receive routing information sent by said other device via the wireless connection;
a switching module (64) configured to switch the wireless connection function from the access point mode to a terminal mode; and
a sending module (65) configured to send the routing information to a router as a terminal, so as to establish a connection with the router.

9. The apparatus of claim 8, wherein the routing information is routing information having been encrypted, and
the apparatus further comprises:
a decrypting module (71) configured to decrypt the received routing information according to a preconfigured secret key so as to obtain the decrypted routing information; and
the sending module (65) comprises:
a sending submodule (72) configured to send the decrypted routing information to the router as the terminal.

10. The apparatus of claim 8, further comprising:
a broadcasting module (81) configured to, before establishing the wireless connection with other device as the access point, broadcast a device identification of itself.

11. An apparatus for transmitting routing information, comprising:
an establishing module (91) configured to establish a wireless connection with a smart device in an access point mode; and
a first sending module (92) configured to send routing information to the smart device such that the smart device establishes a connection with a router according to the routing information.

12. The apparatus of claim 11, further comprising:
a first receiving module (101) configured to, before establishing the wireless connection with the smart device in the access point mode, receive a device identification broadcasted by the smart device;
a second sending module (102) configured to send the device identification to a server;
a second receiving module (103) configured to receive a secret key corresponding to the device identification sent by the server; and
an encrypting module (104) configured to encrypt the routing information according to the received secret key so as to obtain the encrypted routing information; and
the first sending module (92) comprises:
a sending submodule (105) configured to send the encrypted routing information to the smart device.

13. A computer program, which when executing on a processor of a smart device, performs a method according to any one of claims 1 to 4.

14. A computer program, which when executing on a processor of a device, performs a method according to any one of claims 5 to 7.
